## Europäisches Patentamt

## European Patent Office

## Office européen des brevets

(11) Veröffentlichungsnummer: **0 223 133**
**B1**

(12) **EUROPÄISCHE PATENTSCHRIFT**

(45) Veröffentlichungstag der Patentschrift:
**11.01.89**

(21) Anmeldenummer: **86115135.5**

(22) Anmeldetag: **31.10.86**

(51) Int. Cl.⁴: **A01B 49/06**, A01B 29/04

(54) Sämaschine.

(30) Priorität: **09.11.85 DE 3539819**

(43) Veröffentlichungstag der Anmeldung:
**27.05.87 Patentblatt 87/22**

(45) Bekanntmachung des Hinweises auf die Patenterteilung:
**11.01.89 Patentblatt 89/2**

(84) Benannte Vertragsstaaten:
**AT DE FR GB NL**

(56) Entgegenhaltungen:
**DE-A- 2 001 062**
**DE-A- 3 105 638**
**DE-A- 3 108 777**
**DE-A- 3 309 279**
**FR-A- 2 121 575**
**FR-A- 2 526 626**
**US-A- 2 042 896**
**US-A- 3 339 643**
**US-A- 3 563 191**

(73) Patentinhaber: **Amazonen-Werke H. Dreyer GmbH & Co. KG, Am Amazonenwerk 9-13,
D-4507 Hasbergen-Gaste(DE)**

(72) Erfinder: **Gattermann, Bernd, Eichenwall 3, D-2872 Hude i.O.(DE)**

(74) Vertreter: **Patentanwälte Grünecker, Kinkeldey, Stockmair & Partner, Maximilianstrasse 58,
D-8000 München 22(DE)**

ACTORUM AG

## Beschreibung

Die Erfindung betrifft eine Sämaschine mit Saatausläufen bzw. Säscharen gemäß des Oberbegriffes des Anspruches 1.

Eine derartige Sämaschine ist bereits durch die DE-OS 2 001 062 bekannt. Diese Drillmaschine besteht aus einer Ringelwalze und einem oberhalb der Walze in einem Rahmen angeordneten Saatkasten. Der Saatkasten weist Dosiereinrichtungen herkömmlicher Bauart, sowie Saatgutleiteinrichtungen auf. Die Saatleitungen enden oberhalb der Bodenoberfläche unmittelbar hinter der Ringelwalze, zu deren Profil die Saatgutleitungen auf Spitze stehend angeordnet sind. Die Ringelwalze soll die Drillschare herkömmlicher Drillmaschinen ersetzen, da sie Dämme und Furchen bildet, in denen das Saatgut abgelegt wird. Das Eigengewicht der Ringelwalze bzw. das Gewicht der Drillmaschine insgesamt führt zu einer Rückverfestigung des Ackerbodens im Oberflächenbereich, wobei die Lockerung des Bodens durch ein gegenüber der Ringelwalze vorlaufend angeordnetes Bodenbearbeitungsgerät erfolgen kann.

Durch die dachförmigen Umfangsprofile der Ringelwalze werden die Dämme und Furchen, in denen das Saatgut abgelegt wird, an der Bodenoberfläche gebildet. Zum Erzeugen dieser Dämme und Furchen, für die Saatgutaufnahme, durch die Profilierung der Ringelwalze muß gewährleistet sein, daß sich das dachförmige Umfangsprofil der Walze nicht durch anhaftendes Erdreich zusetzt. Ein Anhaften des Erdreiches am Ringelwalzenumfang macht die Erzeugung der für die Saatgutaufnahme notwendigen Dämme und Furchen unmöglich. Dieses Anhaften des Erdreiches an der Umfangsfläche der Ringelwalze soll beispielsweise durch die Anordnung von Abstreifern verhindert werden. Auch kann dieses Anhaften des Erdreiches durch eine das Anhaften verhindernde Beschichtung der Umfangsfläche der Ringelwalze erreicht werden, wobei die Beschichtung aus Emaille, Gummi oder Kunststoff bestehen soll.

Die Funktionsweise der Ringelwalze läßt sich jedoch nicht immer gewährleisten, denn beim Einsatz der Ringelwalze auf dem Acker kommt es zu Beschädigungen der Beschichtung am Ringelwalzenumfang durch z.B. Steine und dgl. An den beschädigten Stellen haftet Erdreich am Walzenumfang und bildet so den Grundstein für den weiteren Aufbau einer störenden Erdschicht, die die Bildung der für die Saatgutaufnahme notwendigen Dämme und Furchen unmöglich macht. Weiterhin ist diese Spezialbeschichtung des Walzenumfanges sehr teuer.

Selbst durch den Einsatz von Abstreifern vom Walzenumfang läßt sich die Funktionsweise der Ringelwalze nicht sicherstellen, da die Walze durch die Profilierung ihrer Umfangsfläche ein Anhaften von Erdreich begünstigt. Besonders auf schweren Böden neigt dieses dachförmige Profil der Walze zum Verkleben mit Erde und führt im ungünstigsten Fall durch den Einsatz der Abstreifer zum Abbremsen der Ringelwalze bis hin zum Stillstand der Walze, wodurch das Schaffen eines guten Saatbettes nicht mehr möglich ist und das Saatgut so nicht in den Boden eingebracht wird, ganz abgesehen davon, daß auch der Antrieb der Dosierorgane, der von der Ringelwalze erfolgt, nicht mehr gleichmäßig ist und die Ausbringmenge somit schwankt.

Als weiterer Nachteil erweist sich die Notwendigkeit von verschiedenen Profilformen des Walzenumfanges bei unterschiedlichen Böden. So wird auf leichten, lockeren Böden eine Ringelwalze mit einer stumpfwinkligen Profilform und auf schweren Böden eine Walze mit spitzwinkliger Profilform eingesetzt. Auf einem Betrieb mit wechselnden Bodenarten läßt sich die aus einer Ringelwalze und Saatkasten bestehende Drillmaschine also nicht universell einsetzen. Das Saatgut wird in der tiefen Rillenmitte abgelegt. So wird das Saatgut zwar in einem verfestigten Bereich abgelegt, aber vor allem auf klebrigem Boden ist in der tiefen Rille die Bodenoberfläche verschmiert. Ebenfalls wird auf diesen Böden die Rille nicht ausreichend ausgebildet, weil soviel Boden an der Walze haften bleibt.

Des weiteren ist durch die amerikanische Patentschrift US-A 3 339 643 eine Bodenbearbeitungsmaschine mit einer Nachlaufwalze sowie einer Sämaschine bekannt. Die Bodenbearbeitungsmaschine besteht aus einer um eine horizontal und quer zur Fahrtrichtung verlaufenden Achse antreibbaren Bodenbearbeitungsorgan hinter welchem eine Bodenwalze angeordnet ist, die aus nebeneinander angeordneten Gummireifen besteht. Des weiteren soll nach dem Text dieser amerikanischen Patentschrift eine konventionelle Sämaschine vorhanden sein, die von einem auf der Welle der Bodenbearbeitungsmaschine angeordneten Zahnrad angetrieben wird in welcher Weise das Saatgut von der Sämaschine in den Boden eingebracht werden soll, ist dieser Patentschrift nicht zu entnehmen.

Der Erfindung liegt daher die Aufgabe zugrunde, eine Sämaschine mit verstopfungsfreier Bodenwalze zu schaffen, wobei das Saatgut in einen optimal angedrückten Bodenbereich eingebracht werden soll.

Diese Aufgabe wird erfindungsgemäß durch den kennzeichnenden Teil des Anspruch 1 gelöst. Infolge dieser Maßnahme wird mit einfachsten Mitteln eine in die Sämaschine integrierte Bodenwalze geschaffen, die den durch eine Bodenbearbeitungsmaschine gelockerten Boden rückverfestigt, wodurch das Saatgut in einen optimal angedrückten Boden eingebracht wird. Somit erhält das Saatgut anschluß an die Bodenkapillare und es ergeben sich optimale Wachstumsbedingungen für das in den Boden abgelegte Saatgut. Durch die nebeneinander angeordneten Gummireifen entsteht eine verstopfungsfreie Bodenwalze, die infolge der Walkarbeit der Reifen einen Selbstreinigungseffekt aufweist, wodurch der Einsatz von am Walzenumfang angeordneten Abstreifern überflüssig wird. Die erfindungsgemäße Bodenwalze läßt sich sowohl auf wechselnden als auch auf schweren Böden einsetzen und verrichtet auf allen Bodenarten eine zufriedenstellende Arbeit bei optimaler Funktionsfähigkeit.

Durch die Abstützung der Sämaschine auf die Bodenwalze ergibt sich eine äußerst kompakte Baueinheit, die sowohl als Solomaschine mit Packwirkung als auch in Kombination mit einem Bodenbearbeitungsgerät gefahren werden kann. Wird die sog. Terrareifen-Packer-Sämaschine in Kombination mit einer Bodenbearbeitungsmaschine gefahren, bewirkt die kompakte Bauweise dieser Maschine eine wesentliche Verlagerung des Schwerpunktes in Richtung auf den die Kombination ziehenden Schleppers, was zu einer Reduzierung der zum Ausheben der Kombination notwendigen Hubkräfte führt. Hierdurch sinkt der Hubkraftbedarf des die Kombination ziehenden Schleppers, wodurch der Einsatz von Schleppern geringerer Leistungsstärke möglich wird. Weiterhin wird beim Auftreten von Steinen nicht die gesamte Maschine, wie dies bei einem starren Walzenkörper der Fall wäre, angehoben, da die Reifen ausweichen können.

Durch die selbstreinigende Wirkung der Bodenwalze, welche durch das Walken der Reifen hervorgerufen wird, wird erreicht, daß keine Erde an der Walze haftet, bzw. sich sofort wieder löst. Das Drehen der Bodenwalze wird auch nicht durch Abstreifer behindert, so daß der Walzenumfang ohne nennenswerte Verzögerungen auf der Bodenoberfläche abrollt. Die Schlupfschwankungen der aus den Gummireifen gebildeten Bodenwalze sind gering, so daß sowohl die Dosierorgane über eine Regeleinrichtung sowie die Rührwelle der Sämaschine in erfindungsgemäßer Weise von der Bodenwalze angetrieben werden können.

Dadurch, daß die Säschare in dem von den Gummirädern verfestigten Bereich angeordnet sind, wird das Saatgut in dem rückverfestigten Bereich des Bodens abgelegt, wodurch es Anschluß an die bodenkapillare erhält und somit optimale Wachtumsbedingungen vorfindet.

In einer besonderen Scharanordnung ist vorgesehen, daß jeweils zwei Schare in dem Außenbereich des von den Gummireifen verfestigten bzw. angedrückten Bereiches angeordnet sind, so daß das Saatgut auch hier stets in den verfestigten bzw. angedrückten Boden abgelegt wird und dem Saatgut somit optimale Wachstumsbedingungen geboten werden kann. In bevorzugter Weise ist hierbei die Säscharanordnung so getroffen, daß jeweils zwei Säschare (14, 33) in einer von einem Gummireifen (2) der Bodenwalze (3) verfestigten bzw. angedrückten Bereich (7) angeordnet sind und zwar derart, daß die Säschare (14, 33) dem verfestigten bzw. angeordneten Bereich (7) angeordnet sind.

Weitere Einzelheiten der Erfindung sind der Beispielsbeschreibung sowie den Zeichnungen zu entnehmen. Hierbei zeigen:

Fig. 1 die erfindungsgemäße Sämaschine in einer Bestellkombination und in der Seitenansicht,
Fig. 2 die Sämaschine gemäß Fig. 1 in verschwenkter Position,
Fig. 3 eine weitere erfindungsgemäße Sämaschine ebenfalls in der Seitenansicht,
Fig. 4 eine andere Ausführungsform der erfindungsgemäßen Sämaschine und
Fig. 5 eine Prinzipskizze der in den von den Gummirädern verfestigten Bereichen angeordneten Säschare.

Die Sämaschine 1 stützt sich auf einer aus nebeneinander angeordneten Gummireifen 2 bestehenden Bodenwalze 3 ab, die in die Sämaschine 1 integriert ist und über Kupplungselemente 4 und 5 mit einem vor der Sämaschine 1 angeordneten Bodenbearbeitungsgerät gekoppelt ist. Durch das hintereinander anordnen von Bodenbearbeitungsgerät und Sämaschine 1 entsteht die Bestellkombination 6.

Die Bestellkombination 6 weist beispielsweise ein als Kreisgrubber 7 ausgebildetes Bodenbearbeitungsgerät auf, das über die Tragarme 8 und den als hydraulische Schwenkvorrichtung ausgebildeten Hydraulikzylinder 9 mit den Kupplungselementen 4 und 5 der Sämaschine 1, die als Dreipunktkupplungselemente 10 ausgebildet sind, verbunden ist. Die Sämaschine 1 weist den mit der Bodenwalze 3 fest verbundenen Vorratsbehälter 11 auf, aus dem das Saatgut mit Hilfe der Regeleinrichtung 12 in genau einstellbaren Mengen über die bekannten und nicht dargestellten Dosierorgane, die von der Bodenwalze angetrieben werden, über die Saatleitungen 13 den Säscharen 14 zugeführt wird. Die Säschare 14 sind in zweireihiger Anordnung an der Scharhalteschiene 15 angelenkt, welche über den Rahmen 16 mit dem Tragrahmen 17 der Sämaschine 1 verbunden ist. Diese als Schleppschare ausgebildeten Säschare 14 lassen sich beispielsweise sehr einfach durch Rollschare ersetzten. Hinter das Saatgut in den Boden 18 einbringenden Säscharen 14 ist das als Exaktstriegel 19 ausgebildete Zustreichelement zum Schließen der durch die Säschare 14 erzeugten Säfurchen angeordnet. Dieses Zustreichelement ist über die Halterung 20 mit dem Vorratsbehälter 11 der Sämaschine 1 verbunden. Um ein bequemes Befüllen des Vorratsbehälters 11 zu ermöglichen, sind Trittstufen 21 an der Halterung 20 vorgesehen.

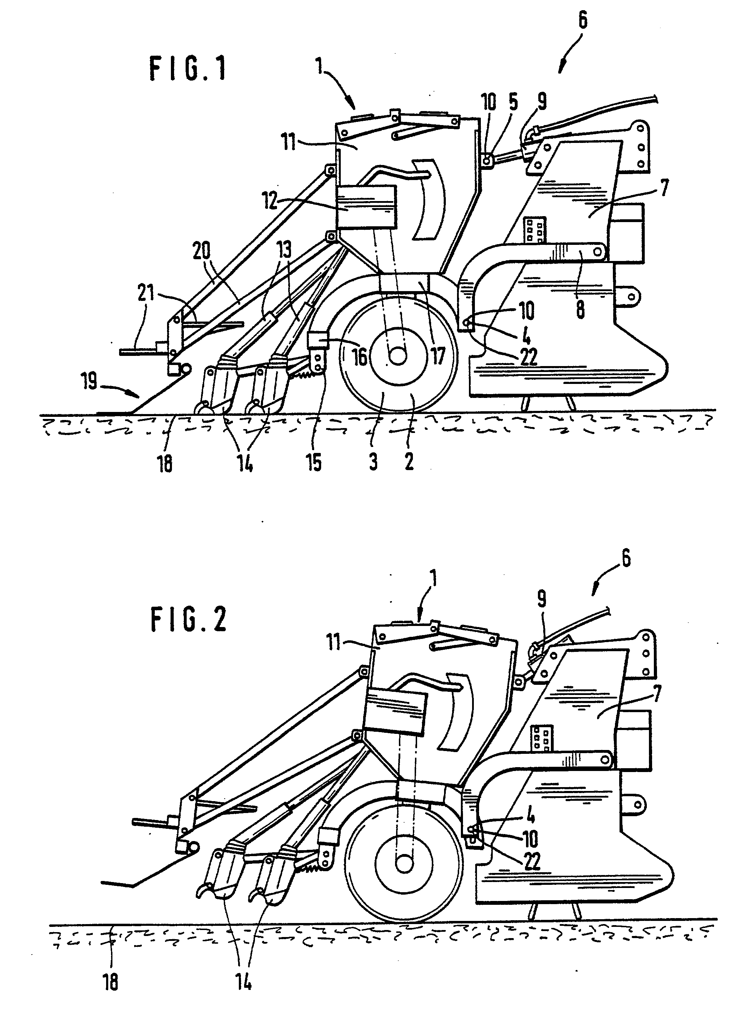

Die Fig. 2 zeigt die Bestellkombination gemäß Fig. 1 in verschwenkter Position. Der Vorratsbehälter 11 der Sämaschine 1 wird über den als hydraulische Schwenkvorrichtung ausgebildeten Hydraulikzylindern 9 um den Drehpunkt 22, der durch das Kupplungselement 4 verläuft, nach vorne, in Richtung auf das Bodenbearbeitungsgerät, verschwenkt. Hierbei werden die Säschare 14 im wesentlichen nach oben verschenkt, wodurch sich eine größere Bodenfreiheit der Säschare 14 gegenüber dem Boden 18 ergibt, selbst wenn das Bodenbearbeitungsgerät nur wenig ausgehoben wird. So werden die Säschare 14 während des Wendevorganges am Feldende in vorteilhafter Weise vor Beschädigungen geschützt und die erforderliche Hubkraft durch Verlagerung des Schwerpunktes reduziert.

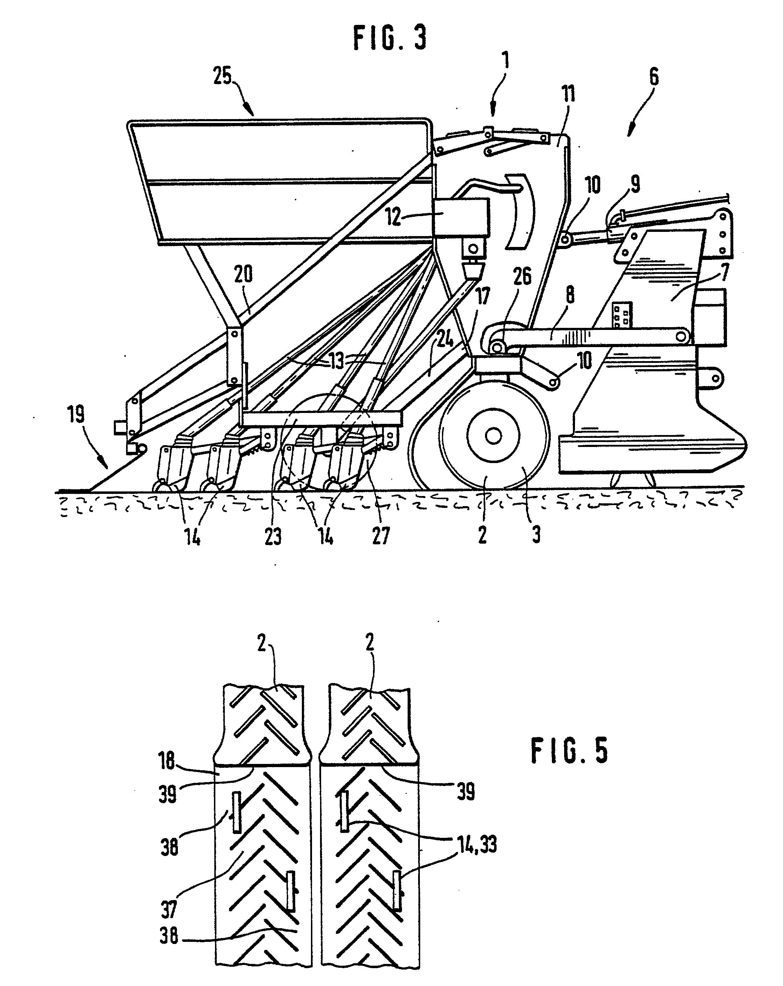

Die Bestellkombination gemäß Fig. 3 zeigt eine Sämaschine 1 mit vierreihiger Scharanordnung, die als Engsaatmaschine ausgebildet ist. Die Saatgutförderung von den nicht dargestellten Dosierorganen erfolgt ebenfalls mittels Schwerkraft zu den Säscharen 14. Um eine einwandfreie Saatgutförderung zu allen Säscheren 14 sicherzustellen, ist es erforderlich, die Bauhöhe der Sämaschine 1 zu vergrößern. Die Säschare 14 sind an einem Scharwechselrahmen 20 angelenkt, der wiederum über die Träger 24 mit dem Tragrahmen 17 der Sämaschine 1 verbunden ist, so daß die an dieser Maschine angeordneten Säschare 14 durch Auswechseln des Scharwechselrahmens 23 gegenüber Säscharen anderer Bauart auf einfache Weise ausgetauscht werden können. Bedingt durch die größere Baulänge der Sämaschine, hervorgerufen durch die vierreihige Scharanordnung, ist es erforderlich, die Sämaschine mit einem Laufsteg 25 auszurüsten, um ein bequemes Befüllen des Vorratsbehälters 11 sicherzustellen. Dieser Ladesteg 25 ist auf der einen Seite am Vorratsbehälter 11 befestigt und stützt sich auf der anderen Seite an der Halterung 20 des Exaktstriegels 19 ab. Diese Sämaschine 1 weist an ihrer Vorderseite sowohl Dreipunktkupplungselemente 10 als auch spezielle Kupplungselemente 26 für die Koppelung mit dem Bodenbearbeitungsgerät auf. Durch das Koppeln der Sämaschine 1 über diese Kupplungselemente 26 mit dem Bodenbearbeitungsgerät wird erreicht, daß sich der Schwenkbereich der Sämaschine 1 beim Betätigen der hydraulischen Schwenkvorrichtung 9 vergrößert, wodurch eine wesentlich größere Bodenfreiheit der Säschare 14 erreicht wird. Der Antrieb der nicht dargestellten Dosierorgane über die Regeleinrichtung 12 erfolgt über das schmale Antriebsrad 27, daß zwischen den Säscharen 14 der ersten und zweiten Säscharreihe angeordnet ist.

Die Versorgung der Säschare einer Sämaschine mit vierreihiger Säscharanordnung läßt sich auch bei geringerer Bauhöhe der Sämaschine mittels Schwerkraft realisieren. Hierzu wird der Vorratsbehälter 11 der Sämaschine zumindest teilweise in einen Bereich hinter der Walze angeordnet.

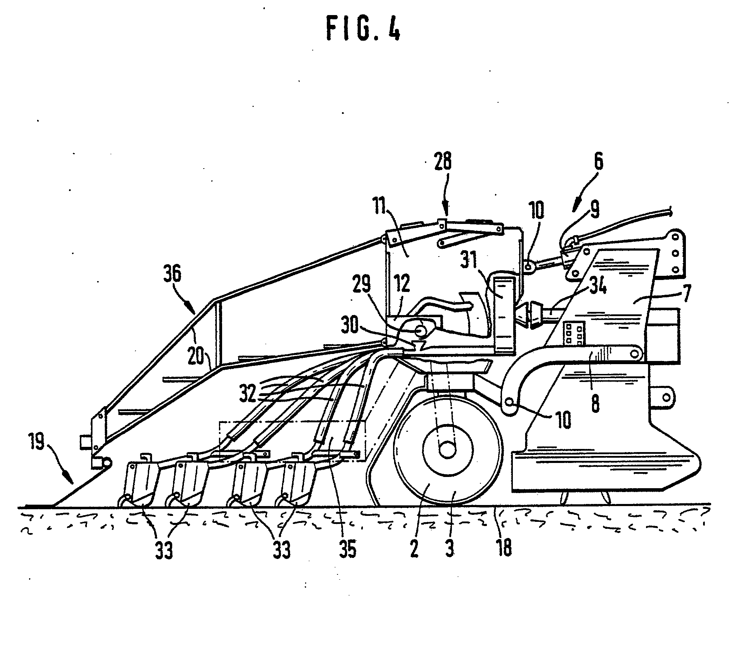

Die Bestellkombination 6 gemäß Fig. 4 besteht aus einer pneumatischen Sämaschine 28, die ebenfalls die in die Sämaschine 28 integrierte Bodenwalze 3 aufweist und mit dem Kreiselgrubber 7 über die Dreipunktkupplungselemente 10 mittels der Tragarme 8 und dem Hydraulikzylinder 9 verbunden ist.

Die von der Bodenwalze 3 über die Regeleinrichtung 12 angetriebenen Dosierorgane 29 fördern das Saatgut in einstellbaren Mengen in die Injektorschleusen 30. Hier wird das Saatgut von den von dem Gebläse 31 erzeugten Luftstrom erfaßt und über die Saatgutleitungen 32 den Säscharen 33 zugeführt. Der Antrieb des Gebläses 31 erfolgt über die zwischen dem Bodenbearbeitungsgerät und der Sämaschine 28 angeordnete Gelenkwelle 34, die über des Getriebe der Bodenbearbeitungsmaschine über eine nicht dargestellte Gelenkwelle von der Zapfwelle eines ebenfalls nicht dargestellten Schleppers angetrieben wird. Die Säschare 33 sind über einen Scharwechselrahmen 35 mit der Sämaschine 28 verbunden. Zum Zustreichen der von der Säscharen 33 erzeugten Furchen ist ein Exaktstriegel 19 hinter den Säscharen 33 angeordnet, in dessen Halterung 20 ein Laufsteg 36 integriert ist, so daß das Befüllen des Vorratsbehälters mit Saatgut auf einfache Weise durchführbar ist.

Die Fig. 5 zeigt die Anordnung der Säschare 14, 33 ausschließlich in dem von den Gummireifen 2 verfestigten Bereich 37. Hierbei sind jeweils zwei Säschare 14, 33 in dem Außenbereich 38 von dem Gummireifen 2 verfestigten bzw. angedrückten Bereiches 37 angeordnet. Hierdurch wird erreicht, daß das Saatgut in einem für das Saatgut entsprechend verfestigten Boden abgelegt wird, so daß das Saatgut anschluß an die wasserführenden Bodenschichten hat. Deutlich ist die elastische Verformung der Aufstandsfläche 39 der Gummireifen 2 auf den Boden 18 zu erkennen.

Durch das Integrieren der Bodenwalze 3 in einer Sämaschine 1, 28 wird erreicht, daß das Saatgut immer in einem von diesen Gummireifen 2 verfestigten bzw. angedrückten Bereich abgelegt wird, egal ob die Sämaschine als Solomaschine oder in einer Gerätekombination gefahren wird. Infolge der Walkarbeit der Gummireifen 2 wird ein Selbstreinigungseffekt erzielt und eine verstopfungsfreie Bodenwalze 3 geschaffen, die sich auf allen Bodenarten einsetzen läßt und überall eine einwandfreie Funktionsfähigkeit gewährleistet.

**Patentansprüche**

1. Sämaschine mit einem Vorratsbehälter (11) und Säscharen (14), denen das Saatgut über einen Dosiermechanismus in einstellbaren Mengen zugeführt wird, wobei vor den Saatausläufen eine über die gesamte Arbeitsbreite der Sämaschine reichende und in die Sämaschine integrierte Bodenwalze (3) angeordnet ist, dadurch gekennzeichnet, daß die Bodenwalze (3) aus nebeneinander angeordneten Gummireifen (2) besteht, daß sich an den Saatausläufen Säschare (14, 33) anschließen, die hinter der bodenwalze (3) angeordnet sind, und daß die Säschare /14, 33) der Sämaschine hinter der Bodenwalze (3) in dem von den Gummireifen (2) verfestigten Bereich (37) angeordnet sind.

2. Sämaschine nach Anspruch 1, dadurch gekennzeichnet, daß die Säschare (14, 33) in jeweils dem Außenbereich (38) des von den Gummireifen (2) verfestigten Bereiches (37) angeordnet sind.

3. Sämaschine nach Anspruch 2, dadurch gekennzeichnet, daß jeweils zwei Säschare (14, 33) in einem von einem Gummireifen (2) der Bodenwalze (3) verfestigten Bereich (37) angeordnet sind und zwar derart, daß die Säschare (14, 33) dem Außenbereich (38) des verfestigten Bereichs (37) angeordnet sind.

**Claims**

1. Drill having a hopper (11) and sowing coulters (14), to which the seed is supplied in adjustable quantities via the intermediary of a metering mechanism, a ground roller (3) being disposed in front of the seed outlets, which ground roller extends over the entire working width of the seed drill and is incorporated in the seed drill, characterised in that the ground roller (3) is formed from rubber tyres (2) which are disposed adjacent one another, in that sowing coulters (14, 33) communicate with the seed outlets and are disposed behind the ground roller (3), and in that the sowing coulters (14, 33) of the seed drill are disposed behind the ground roller (3) in the region (37) which is compacted by the rubber tyres (2).

2. Drill according to claim 1, characterised in that the sowing coulters (14, 33) are each disposed in the outer region (38) of the region (37) which is compacted by the rubber tyres (2).

3. Drill according to claim 2, characterised in that two sowing coulters (14, 33) at a time are disposed in a region (37), which is compacted by a rubber tyre (2) of the ground roller (3), in such a manner that the sowing coulters (14, 33) are disposed in the outer region (38) of the compacted region (37).

**Revendications**

1. Semoir comportant une trémie d'alimentation (11) et des socs de semoir (14) qui reçoivent la semence en quantité dosée par un mécanisme de dosage, en amont des sorties de semence, il est prévu un cylindre-compacteur (3) intégré au semoir et s'étendant sur toure la plage de travail du semoir, semoir caractérisé en ce que le cylindre-compacteur (3) est formé de pneumatiques (2) juxtaposés, et en ce que les socs de semoir (14, 33) adjacents aux sorties de semence et prévus derrière le cylindre-compacteur (3), les socs de semoir (14, 33) du semoir étant situés derrière le cylindre-compacteur (3) dans la zone (37) compactée par les pneumatiques (2).

2. Semoir selon la revendication 1, caractérisé en ce que les socs de semoir (14, 33) sont prévus respectivement dans la zone extérieure (38) de la zone (37) compactée par les pneumatiques (2).

3. Semoir selon la revendication 2, caractérisé en ce que chaque fois deux socs de semoir (14, 33) sont prévus dans une zone (37) compactée par les pneumatiques (2) du cylindre de compactage (3) et cela de façon que les socs de semoir (14, 33) se trouvent dans la zone extérieure (38) de la zone compactée (37).

FIG.1

FIG.2

# FIG. 3

# FIG. 5

# FIG. 4